# EUROPÄISCHE PATENTANMELDUNG

(11) **EP 3 666 503 A1**
(43) Veröffentlichungstag der Anmeldung: **17.06.2020**
(21) Anmeldenummer: 18212285.3
(22) Anmeldetag: 13.12.2018
(51) Int. Cl.: B29C 64/30, B29C 64/40, B33Y 40/00, B33Y 80/00

(54) **BAUTEIL MIT GRIFFABSCHNITT**

(71) Anmelder: Siemens Aktiengesellschaft, 80333 München (DE)
(72) Erfinder: Witter, Heinrich Nikolas, 91056 Erlangen (DE); Schneider, Heinz-Ingo, 85598 Baldham (DE)

(57) **Zusammenfassung**

Die Nachbearbeitung eines additiv gefertigten Bauteils soll vereinfacht werden. Dazu wird ein Verfahren zum Herstellen eines Bauteils (1) durch additives Fertigen vorgeschlagen, wobei ein Griffabschnitt (2), der ausschließlich eine Grifffunktionalität für eine vorgegebene Nachbehandlung des Bauteils nach dem additiven Fertigen besitzt, bei dem additiven Fertigen an das Bauteil (1) angeformt wird. An diesem Griffabschnitt kann das Bauteil bei Nachbehandlungen einfach und sicher gehalten werden.

## Beschreibung

Die vorliegende Erfindung betrifft ein Verfahren zum Herstellen eines Bauteils durch additives Fertigen des Bauteils.

Als additives Fertigungsverfahren oder auch generatives Fertigungsverfahren wird eine Vielzahl unterschiedlicher Herstellungsverfahren bezeichnet. Additiven Fertigungsverfahren ist gemein, dass Werkstücke additiv durch sukzessive Zugabe von Material zu dreidimensionalen Geometrien gefertigt werden. Dabei ist eine Fertigungseinrichtung zum additiven Fertigen, insbesondere ein 3D-Drucker, universell für unterschiedliche Werkstücke, beispielsweise für Werkstücke gleichartiger Materialzusammensetzung aber unterschiedlicher Formgebung oder umgekehrt, einsetzbar. Mit anderen Worten muss die Fertigungseinrichtung zum additiven Fertigen mechanisch nicht an das zu fertigende Werkstück angepasst werden.

Beispiele für additive Fertigungsverfahren sind Fused Filament Fabrication (deutsch Schmelzschichtung), Cladding (Auftragsschweißen), Elektronenstrahlschmelzen und selektives Laserschweißen sowie selektives Lasersintern. Bei jedem der Fertigungsverfahren wird schichtweise ein Material durch eine Deponiereinheit auf einem Substrat aufgebracht. Durch die Positionierung und eine Nachbearbeitung des Materials nach dem Aufbringen können Form und mechanische Eigenschaften des Werkstücks vorgegeben werden. Insbesondere wird das Material in loser Form oder in formbarem Zustand auf dem Substrat abgelegt und anschließend zusammengefügt oder gehärtet.

Bauteile, die in generativen beziehungsweise additiven Fertigungsverfahren hergestellt werden, müssen in der Regel nach dem reinen Aufbauprozess nachbehandelt werden, was als Nachprozessierung bezeichnet werden kann. Neben der thermischen Nachbehandlung sind hier vor allem die Entfernung von der Bauplattform, das Entfernen von Stützstrukturen, das Bearbeiten von Funktionsflächen und die Einbringung von Merkmalen wie Bohrungen oder ähnliches zu nennen. Außerdem werden die Bauteile abschließend häufig diversen Qualitätsprüfungen unterzogen. Für alle genannten Prozesse muss das Bauteil gegriffen, eingespannt oder befestigt werden. Dies gestaltet sich mitunter schwierig, da mögliche Merkmale von additiv gefertigten Bauteilen eine hohe geometrische Komplexität und filigrane Strukturen besitzen, was eine allgemeine Lösung zum Greifen oder Fixieren dieser Bauteile schwierig macht und die Automatisierung der Nachprozessierung bzw. Nachbehandlung erschwert.

Bisher sind die genannten Prozessschritte durch einen hohen Anteil an manueller Arbeit gekennzeichnet. Entweder entscheidet ein Werker, an welcher Stelle das Bauteil gegriffen und eingespannt werden kann, oder es wird unter dem Risiko der Beschädigung dort gegriffen, wo ein Greifer oder eine Spannvorrichtung angesetzt werden kann. Automatisierte Lösungen machen eine Bilderkennung oder aufwändige Sensorik erforderlich.

Die Aufgabe der vorliegenden Erfindung besteht somit darin, die Nachprozessierung eines additiv gefertigten Bauteils einfacher gestalten zu können.

Erfindungsgemäß wird diese Aufgabe gelöst durch ein Verfahren nach Anspruch 1. Vorteilhafte Weiterbildungen der Erfindung ergeben sich aus den Unteransprüchen.

Entsprechend einem Aspekt der vorliegenden Erfindung ist demnach ein Verfahren zum Herstellen eines Bauteils durch additives Fertigen des Bauteils vorgesehen. Es erfolgt ein Anformen eines Griffabschnitts, der ausschließlich eine Grifffunktionalität für eine vorgegebene Nachbehandlung des Bauteils nach dem additiven Fertigen und eine vorgegebene Form besitzt.

Das Bauteil wird also durch ein generatives beziehungsweise additives Fertigungsverfahren hergestellt. Unterschiedliche Arten solcher Fertigungsverfahren sind eingangs erwähnt. Bei dem Fertigen wird ein Griffabschnitt angeformt, der nur eine Grifffunktionalität besitzt. Der Griffabschnitt besitzt also für den bestimmungsgemäßen Betrieb des Bauteils keine Funktion. Die Funktion des Griffabschnitts ist somit darauf beschränkt, dass das Bauteil während einer Nachbehandlung gegriffen, eingespannt, aufgehängt et cetera werden kann. Vorzugsweise wird der Griffabschnitt einteilig mit dem übrigen Bauteil gebildet. Während des Betriebs beziehungsweise Einsatzes des gefertigten Bauteils kann der Griffabschnitt an dem Bauteil verbleiben oder entfernt werden. Jedenfalls besitzt er während des Betriebs beziehungsweise Einsatzes keine dafür notwendige Funktion. Sein Zweck erschöpft sich für den Prozess der Nachbehandlung. Beispielsweise dient der Griffabschnitt zum Einspannen des Bauteils in eine Fräse nach dem additiven Fertigen. Die Fräse erfordert ggf. eine besondere Form des Griffabschnitts. Die Form kann aber auch durch andere Bedingungen vorgegeben sein. Nach der Nachbehandlung wird der Griffabschnitt nicht mehr benötigt.

Bei einer bevorzugten Ausgestaltung weist der Griffabschnitt ein standardisiertes Design auf. Dies bedeutet, dass der Griffabschnitt eine vorgegebene Form besitzt, die bei üblichen beziehungsweise vorgegebenen Einspannwerkzeugen zum sicheren Einspannen notwendig ist. Ein derartiges standardisiertes Design hat den Vorteil, dass der Griffabschnitt von Standardwerkzeugen gegriffen werden kann. Es kann somit für unterschiedlichste Bauteile immer der gleichartig gestaltete Griffabschnitt verwendet werden.

Der Griffabschnitt kann als Stutzen, Stift oder Haken ausgebildet werden. Natürlich sind auch beliebige andere Formen wie Ösen und dergleichen denkbar. Es ist lediglich von Bedeutung, dass der so gestaltete Griffabschnitt auch tatsächlich und vorzugsweise automatisch gegriffen beziehungsweise gehalten werden kann. Insofern kann der Griffabschnitt auch als Halteabschnitt bezeichnet werden. An diesem Halteabschnitt wird nämlich das Bauteil während der Nachbehandlung gehalten. Nachfolgend wird aber stets der Begriff "Griffabschnitt" stellvertretend verwendet.

In einer weiteren Ausgestaltungsform kann vorgesehen sein, dass der Griffabschnitt vor dem additiven Fertigen automatisch von einer Konstruktionssoftware an einer Stelle des Bauteils vorgeschlagen wird. Es liegen also beispielsweise die Konstruktionsdaten des Bauteils in seiner Rohfassung, d.h. ohne den Griffabschnitt, vor. Das so konstruierte Bauteil erfüllt sämtliche Funktionalitäten, die für den bestimmungsgemäßen Betrieb beziehungsweise Einsatz notwendig sind. Zusätzlich soll nun der Griffabschnitt für die Nachbehandlung an dem Bauteil angebracht werden. Dazu sucht die Konstruktionssoftware eine geeignete Stelle automatisch aus, sodass sich der Konstrukteur hierzu keine Gedanken zu machen braucht. Gegebenenfalls verwendet die Konstruktionssoftware bei diesem Vorschlag auch einen standardisierten Griffabschnitt mit vordefinierter Form. Alternativ kann die Form des Griffabschnitts auch von der Konstruktionssoftware vorgeschlagen beziehungsweise optimiert werden. Gegebenenfalls sucht die Konstruktionssoftware für den Griffabschnitt eine Stelle, die beim Einsatz beziehungsweise Betrieb des Bauteils unkritisch ist. Insbesondere soll der Griffabschnitt den Einsatz beziehungsweise Betrieb des Bauteils nicht behindern.

In einer Weiterentwicklung des erfindungsgemäßen Verfahrens kann vorgesehen sein, dass die Stelle des Bauteils, an der der Griffabschnitt angeformt wird, eine vorgegebene Mindestmaterialstärke besitzt. Eine solche Mindestmaterialstärke ist Voraussetzung dafür, dass das Bauteil sicher und ohne Beschädigung an der Stelle beziehungsweise an dem Griffabschnitt gegriffen, eingespannt oder gehalten werden kann. Falls die Materialstärke unterhalb eines vorbestimmten Schwellwerts liegen würde, könnte die Gefahr bestehen, dass das Bauteil während des Nachbehandlungsprozesses bricht oder anderweitig beschädigt wird. Hierbei sind auch Kräfte zu berücksichtigen, die während der Nachbehandlung auf das Bauteil ausgeübt werden. Diese Mindestmaterialstärke kann in einem CAD-Programm vorgegeben werden. Dieses sucht dann für den Vorschlag eine oder mehrere Stellen aus, die für das Anformen des Griffabschnitts geeignet wären. Gegebenenfalls kann der Nutzer dann eine von diesen vorgeschlagenen Stellen manuell auswählen.

Alternativ oder zusätzlich kann vorgesehen sein, dass die Stelle des Bauteils, an dem der Griffabschnitt angeformt sein soll, kein Teil einer bestimmungsgemäßen Funktionsfläche des Bauteils ist. Eine derartige Funktionsfläche wäre beispielsweise die Fläche für eine Passung, bei der ein vorbestimmter Toleranzbereich eingehalten werden muss. Eine andere Funktionsfläche wäre beispielsweise diejenige, auf die gegebenenfalls auch mit anderen Technologien weiter aufgebaut werden muss. Eine Funktionsfläche wäre aber auch eine solche, die von einem Benutzer beim Einsatz des Bauteils angefasst werden muss. Speziell zeichnet sich aber auch eine Funktionsfläche dadurch aus, dass sie eine bestimmte Güte beziehungsweise Maßhaltigkeit oder eine bestimmte Oberfläche aufweist. Generell besitzt eine Funktionsfläche im Einsatz beziehungsweise im Betrieb des Bauteils eine vorgegebene Funktionalität. Solche Funktionsflächen gilt es von dem beziehungsweise den Griffabschnitten freizuhalten.

Des Weiteren sollte darauf geachtet werden, dass sich die Stelle, an der der Griffabschnitt angeformt wird, nicht in einem vorgegebenen Handhabungsraum um das Bauteil bzw. relativ zu dem Bauteil befindet. Dies ist insbesondere dann wichtig, wenn der Griffabschnitt nach der Nachbehandlung nicht entfernt wird. Unter dem Handhabungsraum wird hier derjenige Raum verstanden, der für einen einwandfreien bestimmungsgemäßen Betrieb des Bauteils um dieses herum zur Verfügung stehen muss. Beispielsweise handelt es sich bei dem Bauteil um eine Komponente eines Geräts. Dieses Gerät besitzt eine weitere Komponente, z.B. Arm, Kolben, Zahnrad et cetera, das sich im Betrieb des Geräts nahe an dem Bauteil vorbeibewegt. Eine solche Bewegung dieser Komponente darf nicht durch einen Griffabschnitt behindert werden, der nur für die Nachbehandlung, aber nicht für den Betrieb des Bauteils beziehungsweise Geräts von Bedeutung ist. Gleiches gilt auch für den Fall, dass unmittelbar neben dem Bauteil ein anderes Bauteil platziert werden muss. Auch in diesem Fall darf der notwendige Raum nicht durch einen Griffabschnitt beschränkt oder verbaut sein. Dieser notwendige Raum, der von dem Griffabschnitt freigehalten werden muss, kann auch in dem CAD-Programm vorgegeben beziehungsweise festgelegt werden, sodass dieses CAD-Programm die geeignete Stelle für den Griffabschnitt automatisch vorschlagen kann.

In einem weiteren Ausführungsbeispiel kann diejenige Stelle, die von der Konstruktionssoftware beziehungsweise dem CAD-Programm für den Griffabschnitt vorgeschlagen wird, einen vorgegebenen Gütewert unterschreiten. Es kann also der Griffabschnitt an einer Stelle angeordnet werden, wo die Oberfläche einen großen Toleranzbereich besitzt. Speziell kann wiederum die CAD-Software diese Information bezüglich des Gütewerts verwenden, um automatisch eine entsprechende Stelle für den Griffabschnitt vorzuschlagen.

Darüber hinaus kann vorgesehen sein, dass der Griffabschnitt oder ein Teil davon einen Referenzpunkt für ein Verfahren der Nachbehandlung des Bauteils bildet. In diesem Fall werden beispielsweise die Koordinaten des Griffabschnitts, insbesondere beispielsweise das Zentrum des Griffabschnitts, eine Achse des Griffabschnitts und/oder eine Spitze des Griffabschnitts für die Nachbehandlung bereitgestellt. Die für die Nachbehandlung zuständige Software kann dann diesen Referenzpunkt aufnehmen und für den eigenen Prozess nutzen.

Entsprechend einer alternativen Ausführungsform weist der Griffabschnitt eine Sollbruchstelle auf. Eine derartige Sollbruchstelle kann dazu dienen, den Griffabschnitt nach der Nachbehandlung von dem Bauteil abzubrechen. Dieses Abbrechen kann durch Kippbewegungen und/oder Drehbewegungen erfolgen. Die Sollbruchstelle hat den Vorteil, dass das Abbrechen an einer definierten Stelle erfolgt, sodass beispielsweise zu weit abstehende Reste vermieden werden. Außerdem erleichtert eine derartige Sollbruchstelle das Abbrechen grundsätzlich. Außerdem kann die Sollbruchstelle derart ausgebildet sein, dass das Abbrechen in einer Richtung begünstig ist, während die Hauptbelastung bei der Nachbehandlung in einer anderen Richtung, insbesondere senkrecht dazu, erfolgt.

In einer Weiterbildung des erfindungsgemäßen Verfahrens wird der Griffabschnitt an dem Bauteil derart gestaltet und positioniert, dass er durch eine vorgegebene Zange oder eine vorgegebene Säge von dem Bauteil entfernt werden kann. Es wird also vor der Positionierung beziehungsweise Gestaltung des Griffabschnitts festgelegt, welche Zange oder welche Säge zum Entfernen des Griffabschnitts verwendet werden soll. Insbesondere sind die Örtlichkeiten an dem Bauteil zu beachten, sodass beispielsweise die vorgegebene Zange überhaupt an den Griffabschnitt ansetzen kann oder dass die vorgegebene Säge überhaupt den Griffabschnitt erreicht. In Abhängigkeit von dieser Zangen- beziehungsweise Sägegestalt und der mit diesen Werkzeugen verbundenen Handhabung wird die spezielle Gestalt des Griffabschnitts festgelegt beziehungsweise die Position des Griffabschnitts an dem Bauteil ermittelt. Nur so sind der vorgesehene Einsatz und dessen Handhabung überhaupt möglich.

Darüber hinaus kann vorgesehen sein, dass der Griffabschnitt aus einem Material gefertigt wird, das durch einen vorgegebenen chemischen oder thermischen Prozess von dem übrigen Bauteil entfernbar ist. Es kann also beispielsweise ein chemischer Prozess wie etwa ein Ätzprozess vorgegeben sein. In diesem Fall ist das Material des Griffabschnitts derart zu wählen, dass dieses sich bei dem Ätzprozess ab- beziehungsweise auflöst, während das übrige Bauteil den Ätzprozess unbeschadet übersteht. Ähnliches kann für einen thermischen Ablöseprozess gelten. Beispielsweise wird das Bauteil einschließlich des Griffabschnitts auf eine bestimmte Temperatur gebracht, bei der der Griffabschnitt von dem übrigen Bauteil abschmilzt. In diesem Fall muss der Griffabschnitt aus einem Material bestehen, das einen entsprechend niedrigeren Schmelzpunkt besitzt als das übrige Bauteil. Diese Materialwahl kann dazu beitragen, den Griffabschnitt sicher von dem übrigen Bauteil zu entfernen.

In einer weiteren Ausgestaltung des erfindungsgemäßen Verfahrens wird die Nachbehandlung des Bauteils durchgeführt, wobei das Bauteil dazu automatisch an dem Griffabschnitt gegriffen wird. Unter dem Wort "gegriffen" wird hier ebenfalls der Begriff "eingespannt", "aufgehängt" oder dergleichen verstanden. Als Nachbehandlung des Bauteils kann beispielsweise ein Entfernen von Stützstrukturen, ein Erzeugen einer festgelegten Oberfläche, ein weiteres additives Aufbauen, ein Entfernen von überschüssigem Material, ein chemisches Nachbearbeiten, ein mechanisches Nachbearbeiten, aber auch ein einfaches Handling für Prüfzwecke oder zur Reinigung und dergleichen verstanden werden. Diese Liste ist keinesfalls abschließend. Von besonderem Vorteil ist, dass das Greifen automatisch erfolgen kann, da der Griffabschnitt ja eben gerade dafür vorgesehen ist. Hierdurch lassen sich umfangreiche Nachbehandlungszeiten einsparen.

Entsprechend einem speziellen Aspekt der vorliegenden Erfindung ist ein Computerprogrammprodukt vorgesehen, das Befehle umfasst, welche bei der Ausführung des Programms durch einen Computer diesen in Zusammenwirkung mit einer Fertigungseinrichtung veranlassen, die oben beschriebenen Verfahren und deren Variationen auszuführen. Das Verfahren mit dem Anformen des Griffabschnitts für ausschließlich Grifffunktionalität kann also vollkommen automatisiert durchgeführt werden. Insbesondere kann auch das Vorschlagen einer geeigneten Stelle für den Griffabschnitt automatisch durchgeführt werden.

Die vorliegende Erfindung wird nun anhand der beigefügten Zeichnungen näher erläutert, in denen zeigen:
- FIG 1: ein exemplarisches Bauteil mit einem Griffabschnitt nach dem additiven Fertigen;
- FIG 2: eine CAD-Darstellung des Bauteils von FIG 1 in einem virtuellen Bauraum eines 3D-Druckers; und
- FIG 3: ein schematisches Ablaufdiagramm eines Ausführungsbeispiels eines erfindungsgemäßen Verfahrens.

Die nachfolgend näher geschilderten Ausführungsbeispiele stellen bevorzugte Ausführungsformen der vorliegenden Erfindung dar.

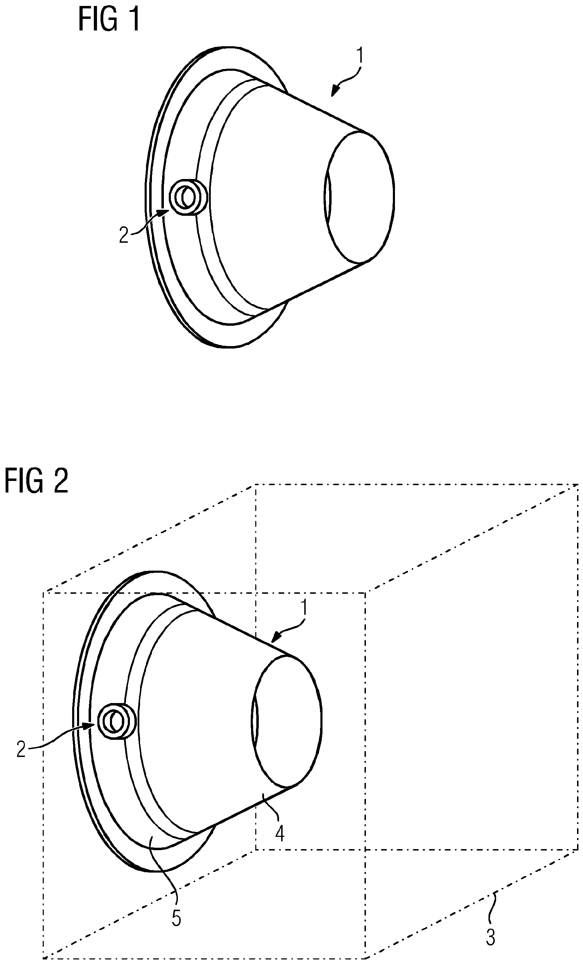

FIG 1 zeigt ein trichterförmiges beziehungsweise flanschartiges Bauteil 1, das durch ein additives beziehungsweise generatives Fertigungsverfahren hergestellt wurde. Dieses Bauteil ist im vorliegenden Beispiel repräsentativ für jedes beliebige andere Bauteil dargestellt. Es besitzt an seiner Außenseite einen Griffabschnitt 2. Dieser Griffabschnitt 2 ist im vorliegenden Fall stutzenförmig ausgestaltet. Auch diese Ausgestaltung ist rein repräsentativ. Der Griffabschnitt 2 kann jegliche andere Form annehmen, die geeignet ist, von einem Werkzeug gegriffen, eingespannt, gehalten et cetera zu werden. Beispielsweise kann der Griffabschnitt 2 auch stiftförmig, hakenförmig und so weiter sein. In der Regel wird es sich bei dem Griffabschnitt 2 im Rahmen des additiven Fertigens um eine Materialzugabe handeln. Prinzipiell kann es sich bei dem Griffabschnitt 2 aber auch um eine Materialeinsparung handeln, sodass der Griffabschnitt beispielsweise durch ein Loch oder eine Einkerbung repräsentiert ist. Auch ein solches Loch oder eine Einkerbung beziehungsweise Nut lässt sich für Einspannzwecke nutzen.

FIG 2 zeigt das Bauteil 1 einschließlich des Griffabschnitts 2 als CAD-Darstellung in einem virtuellen Bauraum 3. Bereits in diesem Stadium als reine CAD-Darstellung wird der an sich für den Einsatz beziehungsweise den Betrieb des Bauteils 1 nicht notwendige Griffabschnitt 2 mit entworfen. Insbesondere wird seine Gestalt und Position an dem Bauteil 1 festgelegt. Gegebenenfalls macht die CAD-Software hierzu entsprechende Vorschläge automatisch. Insbesondere kann für einen solchen Vorschlag die Materialstärke des Bauteils an der jeweiligen Stelle berücksichtigt werden. Es können für den Vorschlag aber auch andere Parameter, wie die Oberflächengüte Einfluss finden. Gegebenenfalls können in diesem Entwurfsstadium sogar die räumlichen Bedingungen berücksichtigt werden, in denen das Bauteil bestimmungsgemäß betrieben beziehungsweise eingesetzt wird. So kann es beispielsweise sein, dass das Bauteil 1 in der Zeichnung von FIG 2 oben unmittelbar an ein anderes Bauteil angrenzt, sodass dort der Griffabschnitt 2 nicht positioniert werden kann. Daher wird er hier etwa in 9-Uhr-Stellung positioniert. Des Weiteren kann auch der vordere Konus 4 eine Funktionsfläche darstellen, etwa eine Passung, die für das Zusammenwirken mit einem anderen Bauteil eine bestimmte Güte haben muss. Aus diesem Grund darf der Griffabschnitt 2 in diesem Beispiel nicht an der Funktionsfläche 4 positioniert werden, sondern wird in einem Randabschnitt 5 außerhalb der Funktionsfläche platziert.

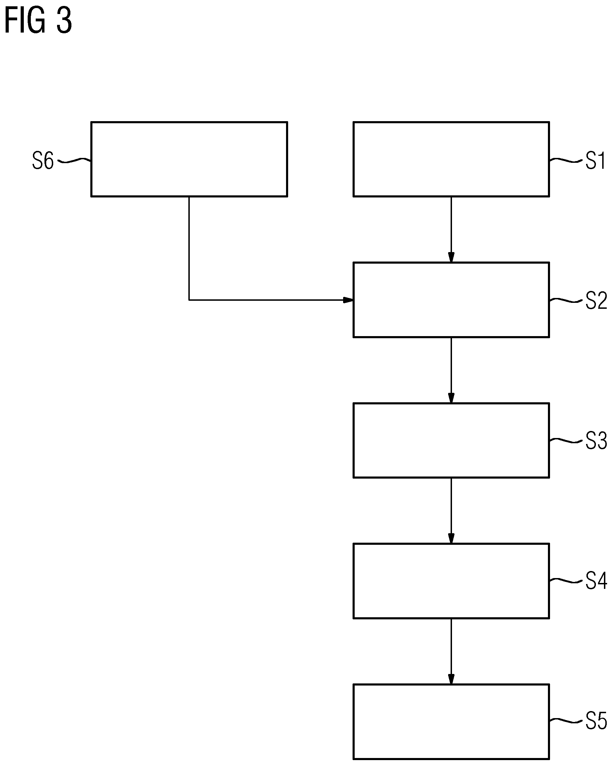

FIG 3 zeigt ein Ablaufdiagramm für ein erfindungsgemäßes Verfahren zum Herstellen eines Bauteils durch additive Fertigung. In Schritt S1 wird das Bauteil 1 entworfen. Vorzugsweise erfolgt dieses Entwerfen durch rechnergestütztes Erstellen einer entsprechenden Konstruktionszeichnung, z.B. durch ein CAD-System. Das Bauteil 1 soll nach dem additiven Fertigen nachbehandelt werden. Bei einer solchen Nachbehandlung sollen z.B. Stützstrukturen entfernt und/oder eine festgelegte Oberfläche erzeugt werden. Gegebenenfalls erfolgen auch eine Reinigung und eine Qualitätsprüfung des Bauteils als sogenannte Nachbehandlung. Für alle diese Nachbehandlungen ist es notwendig, dass das Bauteil 1 einen Griffabschnitt besitzt, sodass es beschädigungsfrei für diese Nachbearbeitungsprozesse gegriffen oder eingespannt werden kann. Ein derartiger Griffabschnitt ist in der Konstruktionsphase bereits vorzusehen.

In einem Schritt S2 erfolgt beispielsweise optional ein automatisches Vorschlagen eines solchen Griffabschnitts. Hierfür kann die entsprechende Software nicht nur die Position, sondern auch die Form und das Material des Griffabschnitts beziehungsweise der Materialzugabe vorschlagen.

In einem Schritt S3 erfolgt das eigentliche additive Fertigen des Bauteils 1. Hierfür sind beliebige generative Herstellungsverfahren möglich. Wesentlich hierbei ist, dass zusammen mit dem Bauteil 1 auch der Griffabschnitt 2 additiv gefertigt wird. Der Griffabschnitt 2 wird hierdurch vorzugsweise einteilig mit dem Bauteil 1 gefertigt.

In einem Schritt S4 kann schließlich eine Nachbehandlung des additiv gefertigten Bauteils folgen. Hierbei wird der Griffabschnitt von einem entsprechenden Werkzeug gegriffen beziehungsweise eingespannt oder gehalten. Im Falle eines stutzenförmigen Griffabschnitts 2 kann das Haltewerkzeug beispielsweise einen Stift besitzen, der in den Stutzen eingeführt wird, sodass der Griffabschnitt mit dem Bauteil 1 gehalten wird. Falls der Griffabschnitt stiftförmig ausgebildet ist, können Backen eines Greifwerkzeugs diesen Stift mit dem Bauteil 1 halten. In dem gehaltenen Zustand wird das Bauteil 1 nachbehandelt. Neben den oben bereits erwähnten Nachbehandlungsmethoden kann auch eine chemische Nachbearbeitung oder auch nur eine Reinigung erfolgen. Selbstverständlich können auch mehrere Nachbehandlungsschritte durchgeführt werden. Falls für unterschiedliche Nachbehandlungsschritte unterschiedliche Griffabschnitte notwendig sind, kann das Bauteil 1 auch mit mehreren solchen Griffabschnitten beim additiven Fertigen versehen werden. Diese mehreren Griffabschnitte können gleich oder auch unterschiedlich geformt sein. Unter Umständen sind sie spezifisch für die jeweilige Nachbehandlungsmethode zu gestalten.

Optional kann in einem Schritt S5 vorgesehen sein, dass der oder die Griffabschnitte vor dem Einsatz beziehungsweise die Inbetriebnahme des Bauteils 1 von diesem entfernt werden. Ein solches Entfernen kann mechanisch etwa durch eine Zange oder Säge, aber auch chemisch oder thermisch erfolgen.

In einem optionalen Schritt S6 können die Einsatzbedingungen des Bauteils 1 vorgegeben werden. Derartige Einsatzbedingungen können Raumbedarf, Betriebstemperatur, Methode für das Entfernen des Griffabschnitts und der gleichen sein. All diese Bedingungen können in Schritt S2 beim automatischen Vorschlagen eines Griffabschnitts berücksichtigt werden.

Nachfolgend wird ein konkretes Ausführungsbeispiel beschrieben, bei dem eine Materialzugabe als Griffabschnitt an einem geeigneten Bereich des Bauteils 1 erzeugt wird. Die Materialzugabe dient als Griffpunkt für Greifer oder Spannvorrichtungen für die nachgelagerten Schritte. Die Materialzugabe, d.h. der Griffabschnitt, soll so ausgeführt sein, dass sie bauteilübergreifend eine vergleichbar einfache Handhabung ermöglicht, beispielsweise durch ein standardisiertes Design. Der geeignete Ort für die Materialzugabe am Bauteil soll während des Designprozesses im CAD-Programm erfolgen.

In einer Ausprägung der Erfindung wird dazu von der CAD-Software ein geeigneter Bereich vorgeschlagen, an dem das Bauteil eine ausreichende Materialstärke aufweist und sich keine Funktionsflächen befinden. Die so im CAD-Programm angelegte Materialzugabe kann in der Designsoftware auch der Referenzpunkt für nachgelagerte Bearbeitungsschritte sein. So kann im CAM beispielsweise eine Fräsoperation angelegt werden, deren CNC-Programm die Materialzugabe berücksichtigt. Beispielsweise kann die Materialzugabe als Einspannpunkt für eine Fräsmaschine verwendet werden. Das bedeutet, dass eine umfangreiche Einmessung des Bauteils in der Fräsmaschine entfällt.

Weiterhin könnte durch die Materialzugabe das Problem der Entfernung von Stützstrukturen und Bauplattenanbindung vereinfacht werden, da ein geeigneter Greifpunkt bereits am Bauteil angebracht ist. Die Materialzugabe ist vorzugsweise selbst so beschaffen, dass sie nach der Fertigstellung des Bauteils leicht entfernt werden kann, entweder beispielsweise über eine Zange oder eine Säge.

In vorteilhafter Weise erfolgt also ein Anlegen eines Greifpunkts in der CAD-Software während des Designprozesses eines additiv zu fertigenden Bauteils. Außerdem wird die Möglichkeit eröffnet, diesen Greifpunkt beziehungsweise Griffabschnitt als Referenzpunkt für nachgelagerte Prozessschritte und die CAM-CNC-Programmierung zu verwenden. Schließlich wird so beispielsweise ein standardisierter Greifpunkt für das additiv gefertigte Bauteil am Bauteil selbst während des Aufbauvorgangs erzeugt.

Die additive Fertigung zeichnet sich dadurch aus, dass der Aufbauvorgang selbst in der Praxis nur einen geringen Teil der gesamten Wertschöpfungskette (etwa 30 Prozent) ausmacht. Dies liegt an der aufwändigen Nachbearbeitung und der komplexen Handhabung der Bauteile. Hier greift in vorteilhafter Weise die Erfindung ein und schlägt eine Lösung vor. Erfindungsgemäß kann nämlich durch den angeformten Griffabschnitt das Handling der Bauteile stark vereinfacht werden, was wiederum die Komplexität der Nachbearbeitung reduziert und damit die Automatisierbarkeit erhöht, die Dauer der gesamten Wertschöpfungskette verkürzt und letztlich Kosten spart. Ein derartiger automatisierter Prozess kann durch ein Computerprogrammprodukt realisiert werden, das beispielsweise die Schritte S1 bis S6 oder auch nur die wesentlichen Einzelschritte realisiert.

## Patentansprüche

1. Verfahren zum Herstellen eines Bauteils (1) durch
- additives Fertigen (S3) des Bauteils (1), **gekennzeichnet durch**
- Anformen eines Griffabschnitts (2), der ausschließlich eine Grifffunktionalität für eine vorgegebene Nachbehandlung des Bauteils (1) nach dem additiven Fertigen (S3) und eine vorgegebene Form besitzt, bei dem additiven Fertigen.

2. Verfahren nach Anspruch 1, wobei der Griffabschnitt (2) ein standardisiertes Design aufweist.

3. Verfahren nach Anspruch 1 oder 2, wobei der Griffabschnitt (2) als Stutzen, Stift oder Haken ausgebildet wird.

4. Verfahren nach einem der vorhergehenden Abschnitte, wobei der Griffabschnitt (2) vor dem additiven Fertigen (S3) automatisch von einer Konstruktionssoftware an einer Stelle des Bauteils (1) vorgeschlagen wird (S2).

5. Verfahren nach Anspruch 4, wobei die Stelle des Bauteils (1) eine vorgegebene Mindestmaterialstärke besitzt.

6. Verfahren nach Anspruch 4 oder 5, wobei die Stelle kein Teil einer bestimmungsgemäßen Funktionsfläche (4) des Bauteils (1) ist.

7. Verfahren nach einem der Ansprüche 4 bis 6, wobei sich die Stelle nicht in einem vorgegebenen Handhabungsraum um das Bauteil (1) befindet.

8. Verfahren nach einem der Ansprüche 4 bis 7, wobei die Stelle des Bauteils (1) einen vorgegebenen Gütewert unterschreitet.

9. Verfahren nach einem der vorhergehenden Ansprüche, wobei der Griffabschnitt (2) oder ein Teil davon einen Referenzpunkt für ein Verfahren der Nachbehandlung (S4) des Bauteils bildet.

10. Verfahren nach einem der vorhergehenden Ansprüche, wobei der Griffabschnitt zum Abbrechen eine Sollbruchstelle aufweist.

11. Verfahren nach einem der vorhergehenden Ansprüche, wobei der Griffabschnitt (2) an dem Bauteil (1) derart gestaltet und positioniert wird, dass er durch eine vorgegebene Zange oder eine vorgegebene Säge von dem Bauteil (1) entfernt werden kann (S5).

12. Verfahren nach einem der Ansprüche 1 bis 9, wobei der Griffabschnitt aus einem Material gefertigt wird, das durch einen vorgegebenen chemischen oder thermischen Prozess von dem übrigen Bauteil entfernbar ist (S5).

13. Verfahren nach einem der vorhergehenden Ansprüche, wobei die Nachbehandlung (S4) des Bauteils (1) durchgeführt wird, und das Bauteil dazu automatisch an dem Griffabschnitt (2) gegriffen wird.

14. Computerprogrammprodukt umfassend Befehle, die bei der Ausführung des Programms durch einen Computer diesen in Zusammenwirkung mit einer Fertigungseinrichtung veranlassen, das Verfahren nach einem der vorhergehenden Ansprüche auszuführen.
